# EUROPEAN PATENT APPLICATION

(11) **EP 4 772 398 A1**
(43) Date of publication of application: **08.07.2026**
(21) Application number: 23950063.0
(22) Date of filing: 29.08.2023
(51) Int. Cl.: B60R 1/07

(54) **REARVIEW MIRROR ASSEMBLY**

(71) Applicant: Ficosa International (Taicang) Company Limited, Suzhou, Jiangsu 215400 (CN)
(72) Inventor: ZHANG, Yu, Suzhou, Jiangsu 215400 (CN); LEE, Kyung-ho, Suzhou, Jiangsu 215400 (CN); FANG, Lei, Suzhou, Jiangsu 215400 (CN)
(74) Representative: Patentanwälte Olbricht Buchhold Keulertz
(86) International application number: PCT/CN2023/115418
(87) International publication number: WO 2025/043469

(57) **Abstract**

A rearview mirror assembly, including a support arm (10), a mirror shell (20), a driver (40), and a bracket structure (30). The mirror shell is rotatably attached to the support arm. The driver is disposed in the mirror shell and configured to drive the mirror shell to rotate around a rotation axis relative to the support arm. The bracket structure is shaped to receive the driver therein and support the mirror shell throughout an entire cavity between the mirror shell and the driver. The rearview mirror assembly of the present disclosure is not prone to deformation, and the overall structural strength of the rearview mirror assembly is improved.

## Description

### TECHNICAL FIELD

The present disclosure relates to a rearview mirror assembly.

### BACKGROUND

The description in this section only provides background information related to the present disclosure and does not constitute the prior art.

The rotation of a rearview mirror assembly of a motor vehicle is typically driven by a motor.

In the known rearview mirror assembly, the motor is directly fixed on the lower mirror shell. Due to the small size of the motor and the large size of the lower mirror shell, a large part of the lower mirror shell cannot be supported, making the lower mirror shell prone to deformation. Moreover, the upper mirror shell is also prone to deformation due to lack of support.

It should be noted that the above description of the technical background is only for the convenience of a clear and complete explanation of the technical solutions of the present disclosure and the understanding by those skilled in the art. It cannot be considered that the above technical solutions are well known to those skilled in the art just because these solutions are described in the Background section of the present disclosure.

### SUMMARY

In order to solve the problems pointed out in the Background section or other similar problems, the present disclosure provides a rearview mirror assembly.

In order to achieve the above objective, the present disclosure provides the following technical solutions.

A rearview mirror assembly, including a support arm, a mirror shell, a driver and a bracket structure. The mirror shell is rotatably attached to the support arm. The driver is disposed in the mirror shell and configured to drive the mirror shell to rotate relative to the support arm. The bracket structure is shaped to receive the driver therein and support the mirror shell throughout an entire cavity between the mirror shell and the driver.

Optionally, the mirror shell includes an upper mirror shell, a lower mirror shell connected to the upper mirror shell, and a mirror bezel connected to the lower mirror shell and the upper mirror shell, respectively. The bracket structure is connected to the upper mirror shell, the lower mirror shell and the mirror bezel, respectively.

Optionally, the bracket structure includes an upper base plate connected to the mirror shell, and a lower base plate connected to the mirror shell. The upper base plate and the lower base plate are connected to each other and receive the driver therebetween.

Optionally, the mirror shell includes an upper mirror shell, a lower mirror shell connected to the upper mirror shell, and a mirror bezel connected to the lower mirror shell and the upper mirror shell, respectively. The lower base plate is located between the driver and the lower mirror shell, and the lower base plate is connected to the lower mirror shell. The upper base plate is located between the driver and the upper mirror shell, and is connected to the lower mirror shell, the upper mirror shell and the mirror bezel, respectively.

Optionally, the upper base plate is provided with at least one support rib for supporting the upper mirror shell.

Optionally, the upper base plate is snap-fitted to the upper mirror shell via at least one snap fastener.

Optionally, the upper base plate is provided with at least one mounting position for installing a functional module.

Optionally, the lower base plate is provided with an annular structure which is rotationally engaged with the support arm, and the annular structure is provided with at least one stop element adapted to limit a maximum rotation angle of the mirror shell relative to the support arm.

Optionally, the rearview mirror assembly further includes a gasket provided between the lower base plate and the support arm. At least a portion of the annular structure is received in the gasket. The gasket includes a rigid portion connected to the support arm, and an annular flexible portion. One end of the annular flexible portion is fixed to the rigid portion, and the other end of the annular flexible portion protrudes from the rigid portion and curves inward to be in sealing contact with the annular structure inside.

Optionally, the driver includes a fixed portion attached to the support arm and a movable portion attached to the mirror shell.

The rearview mirror assembly according to the embodiments of the present disclosure can reliably support the mirror shell by disposing a bracket structure in the entire cavity between the driver and the mirror shell, so that the mirror shell is not prone to deformation, and the overall structural strength of the rearview mirror assembly can be improved.

With reference to the following description and drawings, the specific embodiments of the present disclosure are disclosed in detail, and the ways in which the principles of the present disclosure can be adopted are pointed out. It should be understood that the embodiments of the present disclosure are not limited in scope thereby.

### BRIEF DESCRIPTION OF THE DRAWINGS

For a clearer illustration of technical features in the embodiments of the present disclosure or the prior art, a brief description of the drawings for the embodiments or the prior art will be given below. The drawings described below involve only some embodiments of this disclosure. For those of ordinary skill in the art, other drawings can be derived from these drawings without any inventive efforts. In the drawings:
FIG. 1 illustrates a structural schematic diagram of a rearview mirror assembly with a mirror bezel removed, according to an embodiment of the present disclosure;
FIG. 2 illustrates a structural schematic diagram of a rearview mirror assembly with an upper mirror shell removed, according to an embodiment of the present disclosure;
FIG. 3 illustrates a bottom view of a rearview mirror assembly with an upper mirror shell, a lower mirror shell and a mirror bezel removed, according to an embodiment of the present disclosure;
FIG. 4 illustrates a schematic diagram showing a perspective view of a connection between an upper mirror shell and an upper base plate, according to an embodiment of the present disclosure;
FIG. 5 illustrates a schematic diagram showing another perspective view of a connection between an upper mirror shell and an upper base plate, according to an embodiment of the present disclosure;
FIG. 6 illustrates a structural schematic diagram of an upper base plate according to an embodiment of the present disclosure;
FIG. 7 illustrates a structural schematic diagram of a lower base plate according to an embodiment of the present disclosure;
FIGS. 8 and 9 illustrate schematic diagrams showing a connection between a lower base plate and a support arm according to an embodiment of the present disclosure;
FIG. 10 illustrates a schematic diagram showing a connection between a bracket structure and a gasket according to an embodiment of the present disclosure;
FIG. 11 illustrates a schematic diagram showing a connection between a gasket and a bottom cover according to an embodiment of the present disclosure;
FIG. 12 illustrates a structural schematic diagram of a gasket according to an embodiment of the present disclosure;
FIG. 13 illustrates a schematic diagram showing a cooperation between a gasket and a lower base plate according to an embodiment of the present disclosure; and
FIG. 14 illustrates a structural schematic diagram of a motor according to an embodiment of the present disclosure.

### DETAILED DESCRIPTION OF THE EMBODIMENTS

For a better understanding of the technical features of the present disclosure, a clear and complete description of the embodiments of the present disclosure will be set forth with reference to the drawings. The described embodiments are only a part, rather than all, of the embodiments of the present disclosure. All other embodiments derived by persons skilled in the art from the embodiments of the present disclosure without making inventive efforts shall fall within the scope of the present disclosure.

As used herein, the term "including" and variants thereof mean open including, that is, "including but not limited to". Unless otherwise stated, the term "or" means "and/or". The term "based on" means "at least partially based on". The terms "an exemplary embodiment" and "an embodiment" mean "at least one exemplary embodiment". The term "another embodiment" means "at least one other embodiment". The terms "first", "second" or the like can refer to different or the same object.

The use of adjective or adverbial modifiers "upper" and "lower", "front" and "rear", "left" and "right", "top" and "bottom", "inner" and "outer" herein is only for the convenience of the relative reference among a plurality of groups of terms, and does not describe any specific directional restriction on the modified terms.

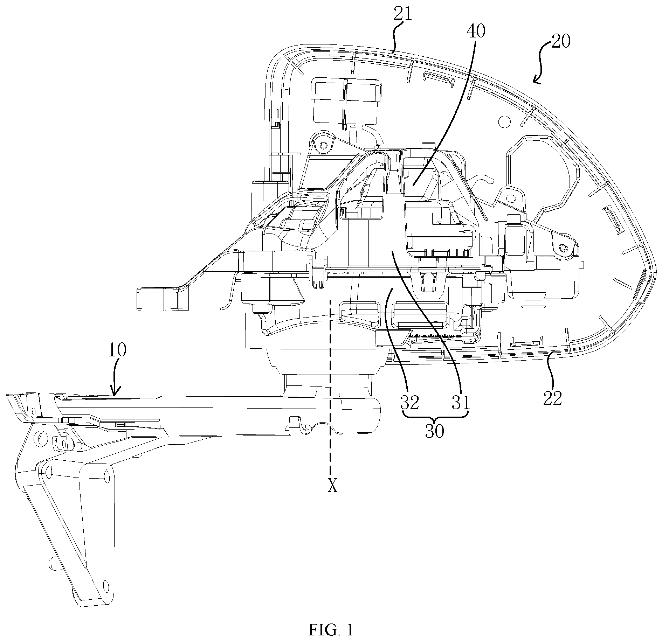

In the embodiments illustrated in FIGS. 1 to 13, the rearview mirror assembly includes a support arm 10, a mirror shell 20, a bracket structure 30, and a driver 40.

The support arm 10 is adapted to be mounted on a suitable external part (not illustrated in the drawings) of a motor vehicle. The motor vehicle may be a sedan, a commercial vehicle, an SUV, a compact car, or any other motorized vehicle. However, the embodiments of the present disclosure are not limited to specific vehicle types. In foreseeable embodiments, the technical solution of the present disclosure may also be extended to any suitable application scenario, and the protection scope of the present disclosure is not limited to application on vehicles.

The mirror shell 20 is adapted to receive a lens (not shown) therein. The mirror shell 20 is rotatably attached to the support arm 10, and rotatable around a rotation axis X (as shown in FIG. 1) between a mirror working position (travelling position) and a mirror folded position (parking position) with respect to the support arm 10. It can be understood that the rotation includes a rotation from the mirror working position to the mirror folded position and a rotation from the mirror folded position to the mirror working position. The specific manner in which the mirror shell 20 is attached to the support arm 10 may be directly connected to the support arm 10 via a rotation shaft or other known rotational connection methods, or may be rotatably connected to the support arm 10 through any other intermediate member, which is not limited in the present disclosure.

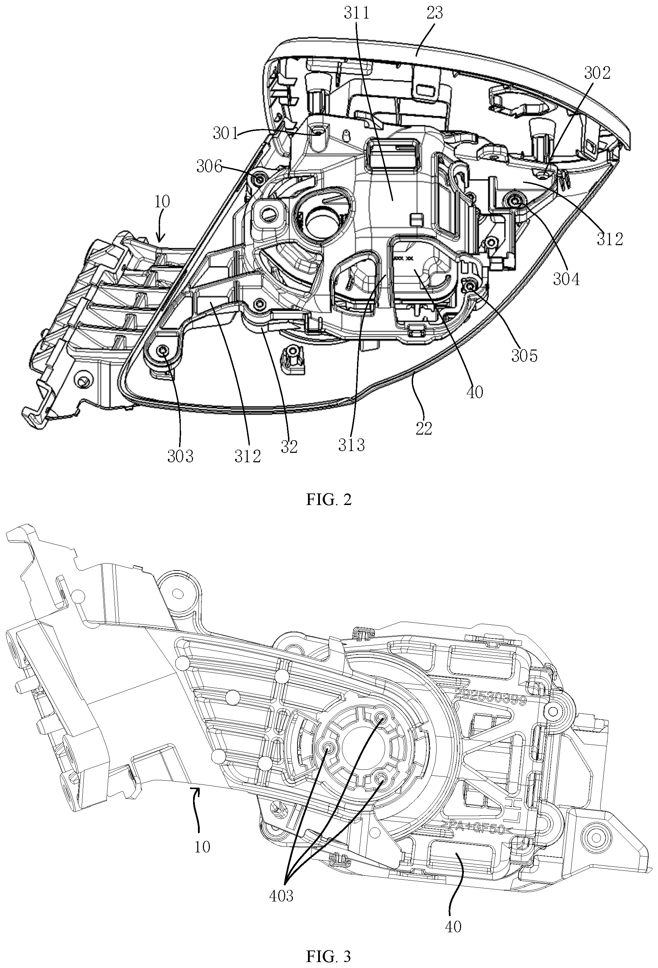

As illustrated in FIGS. 1 and 2, the mirror shell 20 includes an upper mirror shell 21, a lower mirror shell 22 connected to the upper mirror shell 21, and a mirror bezel 23 connected to the lower mirror shell 22 and the upper mirror shell 21, respectively. The mirror bezel 23 is used for receiving a lens and is connected thereto the lens by known connection methods. The lower mirror shell 22, the upper mirror shell 21 and the mirror bezel 23 are connected to each other to form a substantially enclosed mirror shell 20. An optional connection mode among the lower mirror shell 22, the upper mirror shell 21 and the mirror bezel 23 is a snap-fit connection, which is convenient for mounting and disassembly without requiring additional connectors.

The upper mirror shell 21 shown in FIG. 1 is overall an irregular L-shaped structure, which covers the lower mirror shell 22. The left portion of the upper mirror shell 21 in FIG. 1 is a substantially a flat plate, and the right portion thereof is substantially a curved plate.

The lower mirror shell 22 shown in FIG. 2 is overall an irregular triangular structure, two sides of which are substantially extend in two perpendicular directions, and a third side of which is arc-shaped, giving the lower mirror shell 22 an overall curved shape.

The mirror bezel 23 shown in FIG. 2 is an irregular triangular structure, two sides of which are substantially extend in two perpendicular directions, and a third side of which is arc-shaped for engaging with the right portion of the upper mirror shell 21.

The upper mirror shell 21, the lower mirror shell 22 and the mirror bezel 23 shown in FIGS. 1 and 2 are connected to form a mirror shell 20 with a smooth outer wall. The interior of the mirror shell 20 is an irregular triangular cavity. However, in other embodiments, the upper mirror shell 21, the lower mirror shell 22 and the mirror bezel 23 may also be formed into other shapes, which is not limited in the present disclosure.

As illustrated in FIGS. 1 and 2, the driver 40 is disposed in the mirror shell 20 for driving the mirror shell 20 to rotate around the rotation axis X relative to the support arm 10. For example, the driver 40 is a motor.

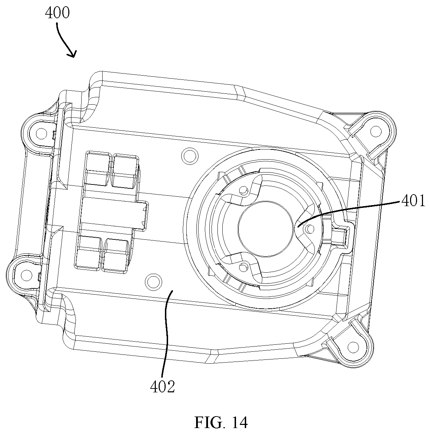

As illustrated in FIG. 14, the driver 40 may include a fixed portion 401 attached to the support arm 10 and a movable portion 402 attached to the mirror shell 20. The fixed portion 401 of the driver 40 is fixed and unmovable relative to the support arm 10, and the movable portion 402 of the driver 40 can rotate synchronously with the mirror shell 20.

In the example of FIG. 3, the fixing portion 401 of the driver 40 is connected to the support arm 10 by a screw 403.

As illustrated in FIGS. 1 and 2, the bracket structure 30 is adapted to receive the driver 40 therein and support the mirror shell 20 throughout the entire cavity between the mirror shell 20 and the driver 40. Of course, the bracket structure 30 is also adapted to receive a driving device (e.g., a gear) associated with the driver 40 therein.

The feature "the bracket structure 30 receives the driver 40 therein" used herein should be understood as that the bracket structure 30 substantially covers the entire driver 40 therein, or that the bracket structure 30 is arranged on the entire outer periphery of the driver 40, including regions above and below the driver 40, so that the bracket structure 30 can support the mirror shell 20 throughout the entire cavity between the mirror shell 20 and the driver 40, to prevent deformation of the mirror shell 20 and improve the overall structural strength of the rearview mirror assembly.

In some embodiments, the bracket structure 30 is connected to the upper mirror shell 21, the lower mirror shell 22 and the mirror bezel 23, respectively, to provide support to each of them, making it less likely for any of the upper mirror shell 21, the lower mirror shell 22 and the mirror bezel 23 to deform.

As shown in FIGS. 1 and 2, the bracket structure 30 includes an upper base plate 31 and a lower base plate 32. The upper base plate 31 and the lower base plate 32 are connected to each to receive the entire driver 40 therebetween. Optionally, the upper base plate 31 is detachably connected to the lower base plate 32 by snap-fits and screws for convenient maintenance and replacement.

In this embodiment, both the upper base plate 31 and the lower base plate 32 are connected to the mirror shell 20 to jointly support the mirror shell 20.

As illustrated in FIGS. 1 and 2, the lower base plate 32 is located between the driver 40 and the lower mirror shell 22, the driver 40 is mounted on the lower base plate 32, and the lower base plate 32 is connected to the lower mirror shell 22 to support the lower mirror shell 22. The upper base plate 31 is located between the driver 40 and the upper mirror shell 21. The upper base plate 31 is connected to the lower mirror shell 22, the upper mirror shell 21 and the mirror bezel 23 respectively to support all of them. Therefore, the bracket structure 30 of this embodiment can provide reliable support to all components of the mirror shell 20, making each component of the mirror shell 20 less prone to deformation.

In some embodiments, as shown in FIGS. 1 and 2, the upper base plate 31 is shaped to extend across a cavity region above and on both sides of the driver 40 in the mirror shell 20.

Specifically, the cavity inside the mirror shell 20 is an irregular triangular cavity. The lower base plate 32 and the driver 40 are disposed in a substantially central region of the triangular cavity, and the upper base plate 31 is disposed in a region of the triangular cavity above and on both sides of the driver 40 to support the upper mirror shell 21 and a portion of the lower mirror shell 22 that is not supported by the lower base plate 32.

In the example of FIG. 2, the upper base plate 31 includes a first portion 311 located above the driver 40 and two second portions 312 located on both sides of the driver 40. The shape of the first portion 311 is substantially matched with the shape of an upper portion of the driver 40 to keep the upper portion of the driver 40 inside it and support the upper mirror shell 21. The first portion 311 has a hollowed-out structure, which helps to reduce the overall weight of the rearview mirror assembly. As illustrated in FIG. 2, the second portions 312 are shaped to substantially match the cavity regions they occupy, and are connected to the lower mirror shell 22 to provide support to the portion of the lower mirror shell 22 that is not supported by the lower base plate 32.

For example, as illustrated in FIG. 2, the first portion 311 of the upper base plate 31 is connected to the mirror bezel 23 by a screw 301, and connected to the lower mirror shell 22 by screws 305 and 306. The second portion 312 on the left side of the upper base plate 31 is connected to the lower mirror shell 22 by a screw 303, and the second portion 312 on the right side is connected to the mirror bezel 23 by a screw 302 and connected to the lower mirror shell 22 by a screw 304.

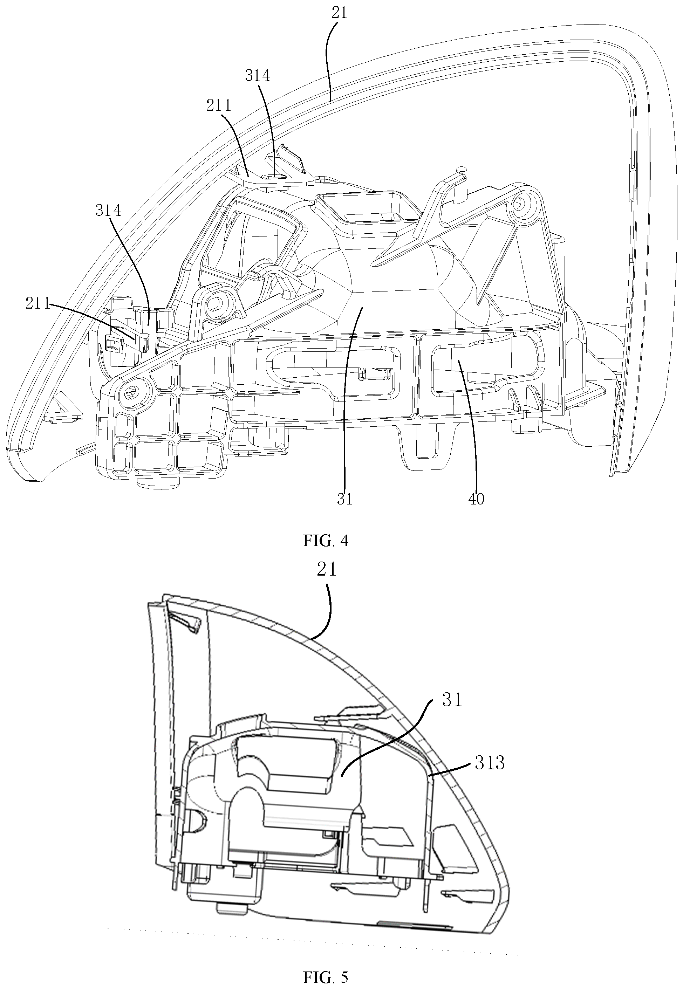

In the example of FIG. 4, the upper base plate 31 is snap-fitted to the upper mirror shell 21 via at least one snap fastener, facilitating easy disassembly of the upper mirror shell 21 while providing support via the snap fastener. Specifically, an inner side wall of the upper mirror shell 21 is provided with one or more first snap fasteners 211, an outer side wall of the upper base plate 31 is provided with second snap fastener 314 corresponding to the first snap fastener 211, and the first snap fastener 211 is snap-fitted to the second snap fastener 314. The presence of the upper base plate 31 allows the first snap fastener 211 to be shorter in length, making the first snap fastener 211 less prone to breakage.

In the example of FIG. 5, the upper base plate 31 is provided with at least one support rib 313 for supporting the upper mirror shell 21. The support rib 313 protrudes from the main body of the upper base plate 31 toward the upper mirror shell 21, thus being closer to the upper mirror shell 21 than the main body to support the upper mirror shell 21. Optionally, the support rib 313 may be in contact with the upper mirror shell 21, or the support rib 313 may be particularly close to the upper mirror shell 21 without being in direct contact therewith. In the latter case, even being subjected to a slight press from the outside, the upper mirror shell 21 can be quickly in contact with the support rib 313 and supported by it, thus also being less prone to deformation.

For example, at least one support rib 313 is disposed at a position corresponding to a middle portion of the upper mirror shell 21, so as to provide key support for the middle portion which is particularly prone to deformation.

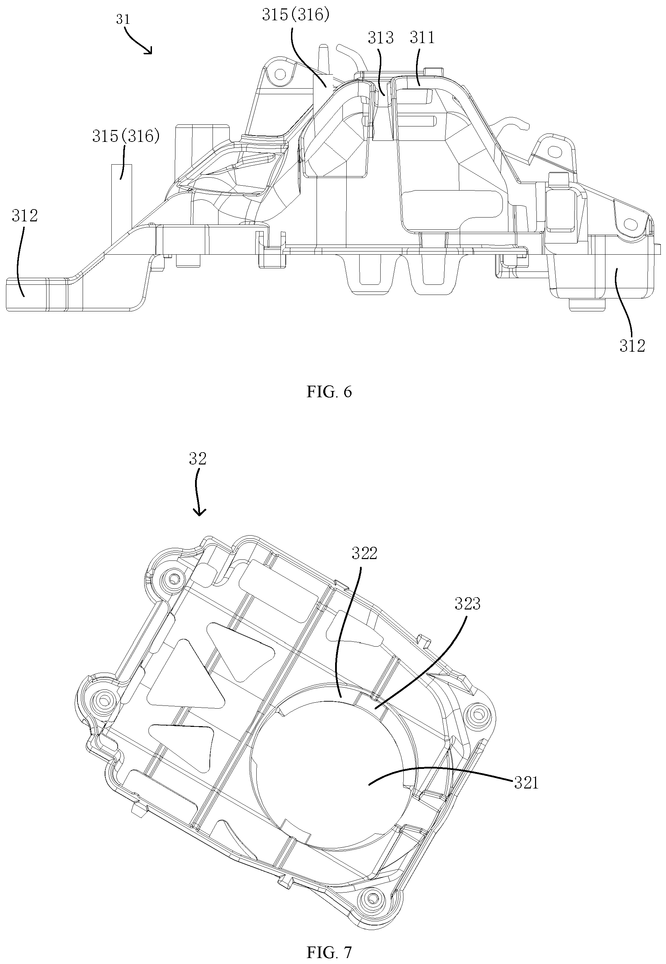

In some embodiments, as illustrated in FIG. 6, the upper base plate 31 is provided with at least one mounting position 315 for installing a functional module in a cavity between the driver 40 and the upper mirror shell 21. The functional module may be, for example, a built-in antenna, a temperature sensor and a Near Field Communication (NFC) module. One or more functional modules may be arranged as needed. For example, the upper base plate 31 is provided with two mounting posts 316, which may be connected to one NFC module.

In some embodiments, the lower base plate 32 is rotatably attached to the support arm 10, so that the shell bracket 30 can rotate around the rotation axis X together with the mirror shell 20.

As illustrated in FIG. 7, the lower base plate 32 is substantially a square frame which is provided with a mounting hole 321 for being rotatably connected to the support arm 10 and to provide an avoidance space for the connection between the driver 40 and the support arm 10. Referring also to FIG. 1, the shape of the lower base plate 32 is substantially matched with the shape of a lower part of the driver 40 to keep the lower portion of the driver 40 inside it and support the lower mirror shell 22. The lower base plate 32 is a hollowed-out structure, which helps to reduce the overall weight of the rearview mirror assembly. The lower base plate 32 is provided with a plurality of threaded holes for connecting to the driver 40 and the upper base plate 31, respectively.

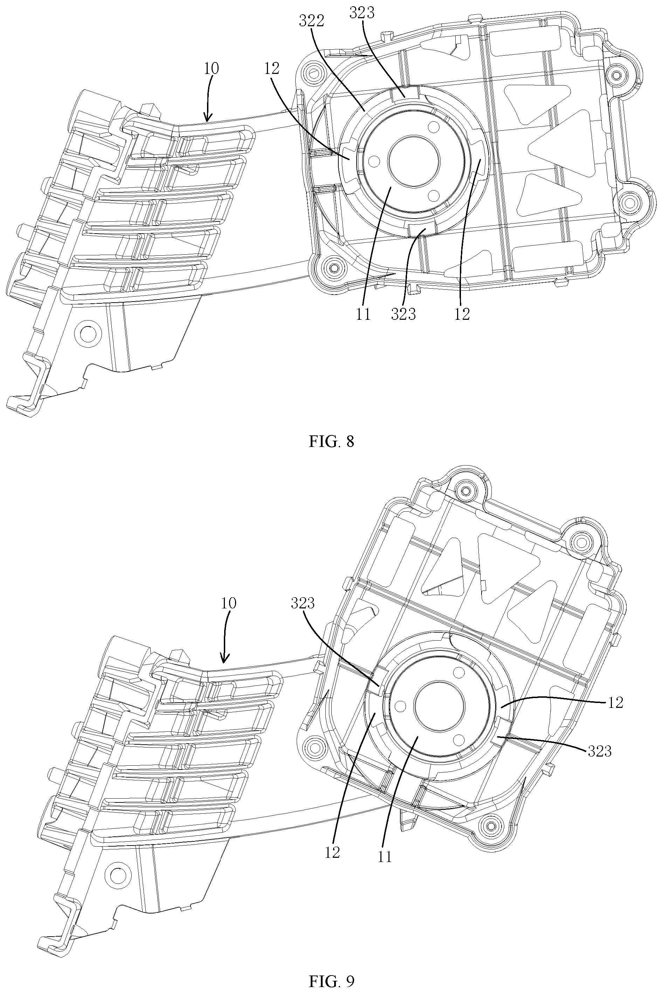

As illustrated in FIGS. 7 and 8, the lower base plate 32 has an annular structure 322 extended around the rotation axis X shown in FIG. 1, and the mounting hole 321 is formed inside the annular structure 322. The annular structure 322 is rotatably connected to the support arm 10 and is provided with at least one stop element 323 configured to limit a maximum rotation angle of the mirror shell 20 relative to the support arm 10, i.e., defining the mirror working position and the mirror folded position.

Specifically, as illustrated in FIGS. 8 and 9, the support arm 10 is provided with an insertion portion 11 to be inserted into the mounting hole 321. An inner side wall of the annular structure 322 is provided with two stop elements 323 spaced apart circumferentially, and an outer side wall of the insertion portion 11 is provided with two blocks 12 spaced apart circumferentially. Each of the stop elements 323 is movable in an arc-shaped area between the two blocks 12, and limits the rotation range of the mirror shell 20 by abutting against the block 12 (as shown in FIG. 9).

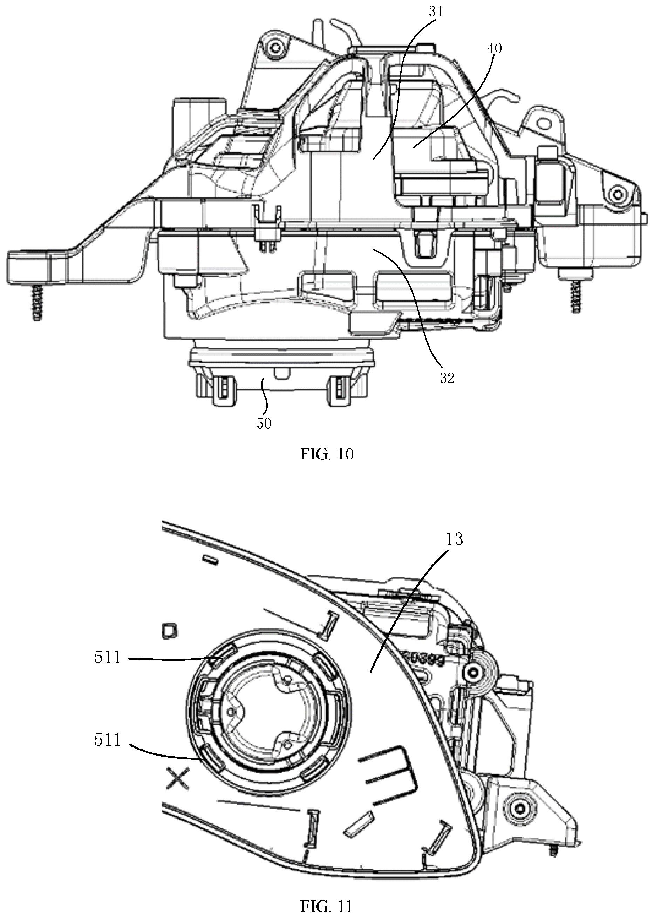

In some embodiments, as illustrated in FIGS. 10 to 13, the rearview mirror assembly further includes a gasket 50 disposed between the lower base plate 32 and the support arm 10, and at least a portion of the annular structure 322 of the lower base plate 32 is received in the gasket 50.

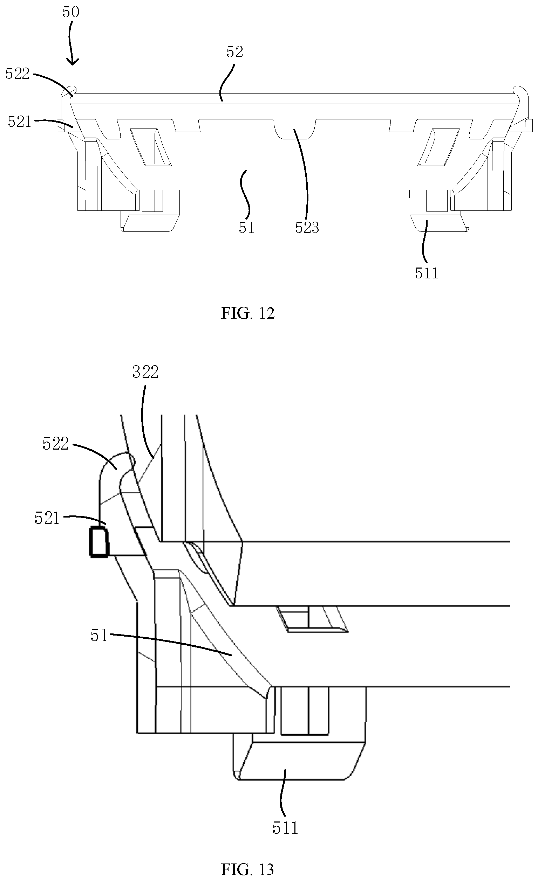

As shown in FIG. 12, the gasket 50 includes a rigid portion 51 and a flexible portion 52, and the rigid portion 51 is attached to the support arm 10. Optionally, as shown in FIG. 11, the rigid portion 51 is snap-fitted to a bottom cover 13 of the support arm 10 by a snap fastener 511.

As shown in FIGS. 12 and 13, the flexible portion 52 is fixed on the rigid portion 51, and is in contact with but not connected to the annular structure 322 of the lower base plate 32, so as to provide a seal between the support arm 10 and the lower base plate 32, reduce friction experienced by the lower base plate 32 when the lower base plate 32 rotates, and avoid noise when the lower base plate 32 rotates.

Referring again to FIG. 12, the rigid portion 51 is substantially a hollow conical structure. The rigid portion 51 extends around the rotation axis X shown in FIG. 1, and has a top opening for receiving the annular structure 322. The flexible portion 52 extends around the rotation axis X shown in FIG. 1 to form a sealing ring, and the flexible portion 52 is fixed to a top periphery of the rigid portion 51.

In the examples of FIG. 12 and FIG. 13, an end 521 of the flexible portion 52 is fixed to a top edge of the rigid portion 51, and the other end 522 of the flexible portion 52 protrudes upward from the rigid portion 51 and is curved inward to be in sealing contact with the outer side wall of the annular structure 322 (as shown in FIG. 13). Optionally, the other end 522 of the flexible portion 52 is curved in a direction close to the rotation axis X from bottom to top, so that the other end 522 of the flexible portion 52 is shaped as a structure that gradually contracts inward from bottom to top. In other words, the cross-section of the other end 522 of the flexible portion 52 is substantially arc-shaped, so as to provide effective sealing and support for the lower base plate 32.

Optionally, as shown in FIG. 12, the end 521 of the flexible portion 52 is provided with a plurality of protrusions 523 protruding downward. The protrusions 523 arranged at intervals along a peripheral direction of the flexible portion 52. Each of the protruding portions 523 is shaped to be inclined inward from top to bottom, so as to be in tight contact with the tapered outer side wall of the rigid portion 51, thereby providing additional holding force for combining the rigid portion 51 and the flexible portion 52.

Optionally, the material of the rigid portion 51 is plastic, such as, but not limited to, polypropylene (PP).

Optionally, the material of the flexible portion 52 is rubber, such as, but not limited to, thermoplastic vulcanizate (TPV). The flexible portion 52 and the rigid portion 51 may be combined by an injection molding process.

The present disclosure has been described above in conjunction with the specific embodiments, but it should be clear to those skilled in the art that these descriptions are exemplary and do not limit the protection scope of the present disclosure. Various variations and modifications can be made to the present disclosure by those skilled in the art according to the spirit and principles of the present disclosure, and are intended to fall within the scope of the present disclosure.

## Claims

1. A rearview mirror assembly, comprising:
a support arm;
a mirror shell rotatably attached to the support arm;
a driver disposed in the mirror shell and configured to drive the mirror shell to rotate relative to the support arm; and
a bracket structure shaped to receive the driver therein and support the mirror shell throughout an entire cavity between the mirror shell and the driver.

2. The rearview mirror assembly according to claim 1, wherein the mirror shell comprises an upper mirror shell, a lower mirror shell connected to the upper mirror shell, and a mirror bezel connected to the lower mirror shell and the upper mirror shell, respectively; and
the bracket structure is connected to the upper mirror shell, the lower mirror shell and the mirror bezel, respectively.

3. The rearview mirror assembly according to claim 1, wherein the bracket structure comprises:
an upper base plate connected to the mirror shell; and
a lower base plate connected to the mirror shell;
wherein the upper base plate and the lower base plate are connected to each other and receive the driver therebetween.

4. The rearview mirror assembly according to claim 3, wherein, the mirror shell comprises an upper mirror shell, a lower mirror shell connected to the upper mirror shell, and a mirror bezel connected to the lower mirror shell and the upper mirror shell, respectively;
the lower base plate is located between the driver and the lower mirror shell, and the lower base plate is connected to the lower mirror shell; and
the upper base plate is located between the driver and the upper mirror shell, and is connected to the lower mirror shell, the upper mirror shell and the mirror bezel, respectively.

5. The rearview mirror assembly according to claim 4, wherein the upper base plate is provided with at least one support rib for supporting the upper mirror shell.

6. The rearview mirror assembly according to claim 4, wherein the upper base plate is snap-fitted to the upper mirror shell via at least one snap fastener.

7. The rearview mirror assembly according to claim 3, wherein, the upper base plate is provided with at least one mounting position for installing a functional module.

8. The rearview mirror assembly according to claim 3, wherein the lower base plate is provided with an annular structure which is rotationally engaged with the support arm; and
the annular structure is provided with at least one stop element adapted to limit a maximum rotation angle of the mirror shell relative to the support arm.

9. The rearview mirror assembly according to claim 8, further comprising a gasket provided between the lower base plate and the support arm, wherein at least a portion of the annular structure is received in the gasket, and the gasket comprises:
a rigid portion connected to the support arm;
an annular flexible portion, one end of which is fixed to the rigid portion, and the other end of which protrudes from the rigid portion and curves inward to be in sealing contact with the annular structure located on its inner side.

10. The rearview mirror assembly according to claim 1, wherein the driver comprises:
a fixed portion attached to the support arm; and
a movable portion attached to the mirror shell.
